# EUROPEAN PATENT APPLICATION

(11) **EP 4 556 760 A1**
(43) Date of publication of application: **21.05.2025**
(21) Application number: 24212560.7
(22) Date of filing: 13.11.2024
(51) Int. Cl.: F16J 15/10, F16J 15/12, E21B 33/12, F16J 15/16, F16F 1/04

(54) **SEALING ELEMENT WITH EXTRUSION PREVENTION FEATURE**

(30) Priority: 14.11.2023 US 202363598918 P; 04.11.2024 US 202418935722
(71) Applicant: Freudenberg Flow Technologies LLC, Houston, TX 77040 (US)
(72) Inventor: Schroeder, John E., Richmond, 77406 (US); Smith, Michael A., Kingwood, 77345 (US); Embury, Philip D., Addlestone, KT15 3LB (GB)
(74) Representative: Schaumburg und Partner Patentanwälte mbB

(57) **Abstract**

A sealing element for sealing a gap between a first member and a second member includes an annular seal body having an inner surface, an outer surface and a pair of side surfaces each connected between opposite ends of the inner surface and the outer surface. A first square garter spring embedded within at least one of an inner and an outer corner of the annular seal body.

## Description

### CROSS-REFERENCE TO RELATED APPLICATIONS

This application claims the benefit of U.S. Provisional Application No. 63/598,918 filed on November 14, 2023. The entire disclosure of the above application is incorporated herein by reference.

### FIELD

The present disclosure relates to a sealing element with extrusion prevention feature.

### BACKGROUND

This section provides background information related to the present disclosure which is not necessarily prior art.

Many sealing elements such as packers, S and FS seals suffer from extrusion/fretting damage at a corner where a garter spring is used to bridge pressure. The unreinforced elastomer material in the area between the spring and the extrusion gap tends to separate from the spring during pressure cycles. This material loss results in customer concern and reduced confidence in the sealing solution. In some applications, this loss of material can inhibit proper performance of the tool it is installed in.

### SUMMARY

This section provides a general summary of the disclosure, and is not a comprehensive disclosure of its full scope or all of its features.

According to an aspect of the present disclosure, a sealing element for sealing a gap between a first member and a second member includes an annular seal body having an inner surface, an outer surface and a pair of side surfaces each connected between opposite ends of the inner surface and the outer surface. A first square or rectangular garter spring embedded within at least one of an inner and an outer corner of the annular seal body.

According to a further aspect, a second garter spring is received within the first square or rectangular garter spring.

According to a further aspect, the second garter spring is a round garter spring.

According to another aspect, a sealing element for sealing a gap between a first member and a second member includes an annular seal body having an inner surface, an outer surface and a pair of side surfaces each connected between opposite ends of the inner surface and the outer surface. A pair of first square or rectangular garter springs embedded within at least two corners of the annular seal body.

According to a further aspect, a pair of second garter springs received within the pair of first square or rectangular garter springs.

According to a further aspect, the pair of second garter springs are round garter springs.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations, and are not intended to limit the scope of the present disclosure.
FIG. 1 is a partial cross-sectional view of a seal according to a first embodiment of the present disclosure;
FIG. 2 is a partial cross-sectional view of a seal according to a second embodiment of the present disclosure;
FIG. 3 is a partial cross-sectional view of a seal according to a third embodiment of the present disclosure;
FIG. 4 is a partial cross-sectional view of a seal according to a fourth embodiment of the present disclosure;
FIG. 5 is a partial cross-sectional view of a seal according to a fifth embodiment of the present disclosure;
FIG. 6 is a partial cross-sectional view of a seal according to a sixth embodiment of the present disclosure; and
FIG. 7 is a partial cross-sectional view of a seal according to a seventh embodiment of the present disclosure.

Corresponding reference numerals indicate corresponding parts throughout the several views of the drawings.

### DETAILED DESCRIPTION

Example embodiments will now be described more fully with reference to the accompanying drawings.

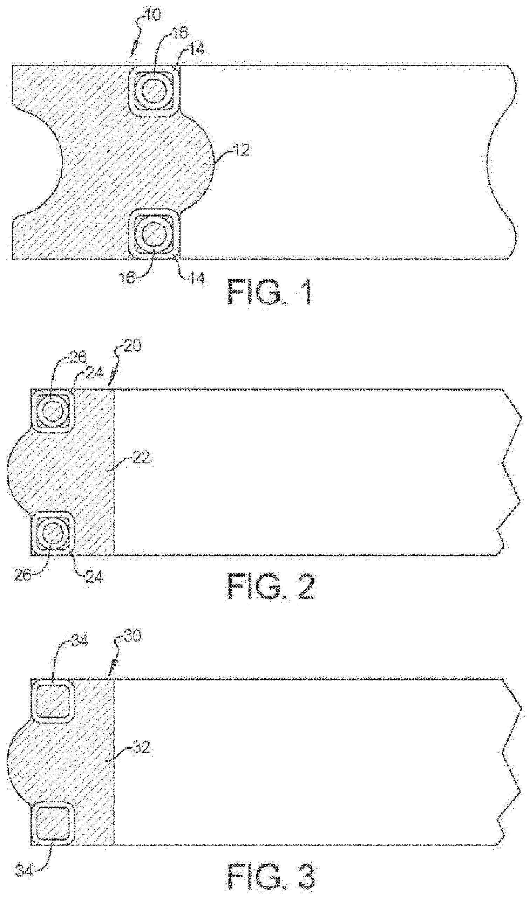

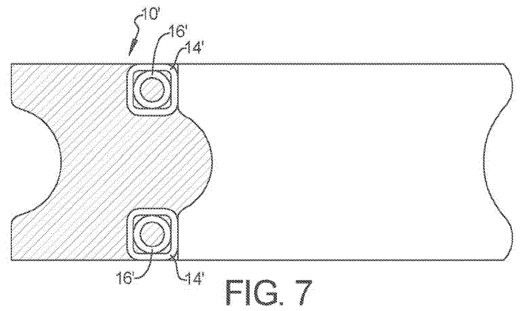

With reference to FIG. 1 a cross-sectional view of a seal 10 according to a first embodiment of the present disclosure will now be described. As shown in FIG. 1, an FS- seal 10 includes a double reinforcing anti-extrusion system embedded in a pair of inner corners of the seal body 12. The double reinforcing anti-extrusion system includes a first square garter spring 14 and a second garter spring 16 received inside the first square garter spring 14. With reference to FIG. 7, it is noted that the first garter spring 14' can also be rectangular with a corner of the rectangle disposed in a corner of the seal 10'. As used herein, the term rectangular is intended to include square. The second garter spring 16' can be rectangular, circular or oval.

With reference to FIG. 2 a cross-sectional view of a seal 20 according to a second embodiment of the present disclosure will now be described. As shown in FIG. 2, an S- seal 20 includes a double reinforcing anti-extrusion system embedded in a pair of outer corners of the seal body 22. The double reinforcing anti-extrusion system includes a first square garter spring 24 and a second garter spring 26 received inside the first square garter spring 24. It is noted that the first garter spring 24 can also be rectangular with a corner of the rectangle disposed in a corner of the seal 20. The second garter spring 26 can be rectangular, circular or oval.

With reference to FIG. 3 a cross-sectional view of a seal 30 according to a third embodiment of the present disclosure will now be described. As shown in FIG. 3, an S- seal 30 includes a reinforcing anti-extrusion system embedded in a pair of outer corners of the seal body 32. The reinforcing anti-extrusion system includes a single square garter spring 34 in each of the two outer corners. It is noted that the single garter springs 34 can also be rectangular with a square corner of the rectangle disposed in a corner of the seal 30.

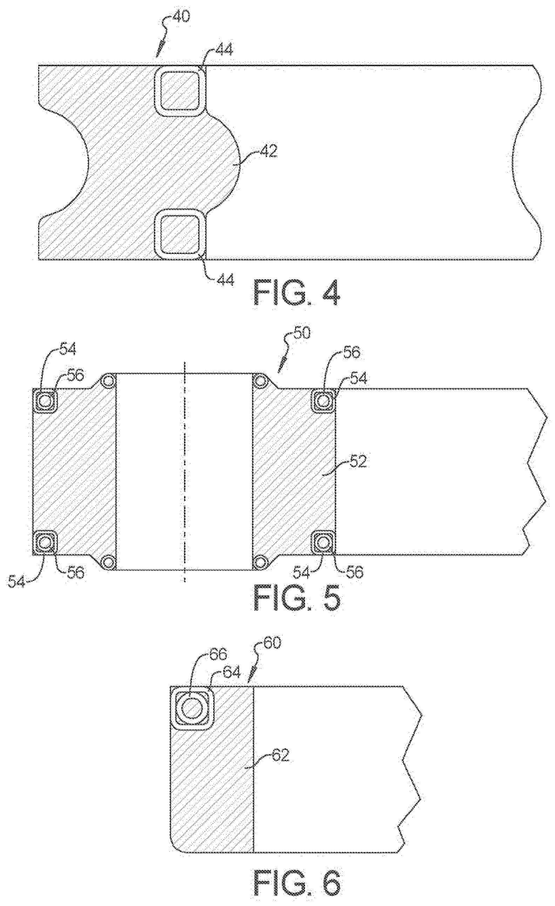

With reference to FIG. 4 a cross-sectional view of a seal 40 according to a fourth embodiment of the present disclosure will now be described. As shown in FIG. 4, an FS seal 40 includes a reinforcing anti-extrusion system embedded in a pair of inner corners of the seal body 42. The reinforcing anti-extrusion system includes a single square garter spring 44 in each of the two inner corners. It is noted that the single garter springs 44 can also be rectangular with a square corner of the rectangle disposed in a corner of the seal 40

With reference to FIG. 5 a cross-sectional view of a seal 50 according to a fifth embodiment of the present disclosure will now be described. As shown in FIG. 5, a split head casing seal 50 includes a double reinforcing anti-extrusion system embedded in a pair of outer corners and a pair of inner corners of the seal body 52. The double reinforcing anti-extrusion system includes a first square garter spring 54 and a second garter spring 56 received inside the first square garter spring 54. It is noted that the first garter springs 54 can also be rectangular with a square corner of the rectangle disposed in a corner of the seal 50. The second garter spring 56 can be rectangular, circular or oval.

With reference to FIG. 6 a cross-sectional view of a seal 60 according to a sixth embodiment of the present disclosure will now be described. As shown in FIG. 6, a packer element 60 includes a double reinforcing anti-extrusion system embedded in a corner of the seal body 62. The double reinforcing anti-extrusion system includes a first square garter spring 64 and a second garter spring 66 received inside the first square garter spring 64. It is noted that the first garter springs 64 can also be rectangular with a square corner of the rectangle disposed in a corner of the seal 60. The second garter spring 66 can be rectangular, circular or oval.

Testing of the reinforced corners of the seal with a rectangular or square garter spring has shown to provide a 50-70% reduction of damageable material due to the leading square spring edge providing a form fitting barrier in the extrusion gap that provides improved extrusion resistance.

The square corners of the rectangular spring profile results in the contact area of the spring with the sealing face increasing considerably. In a round section spring, all loads are transferred through a single point contact between each coil of the spring and the sealing face. This results in high contact stresses between the point contact of the spring coil and the sealing surface and the potential for the spring to mark/indent the sealing face is high. The square corners of the rectangular spring profile results in each spring coil making contact over a much longer contact length therefore the stress at the surface will be considerably reduced as load is transferred over a larger surface area and there is less risk of the spring marking/causing significant marking or deformation to the surface. Another aspect is that the current spring presents a case where any elastomer only needs to pass this thin contact area when it extrudes. The deeper contact area of the square corners of the rectangular spring presents a much longer path for any elastomer to extrude through. The point where extrusion damage can occur is further away from the material at risk from extrusion.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A sealing element for sealing a gap between a first member and a second member, comprising:
an annular seal body having an inner surface, an outer surface and a pair of side surfaces each connected between opposite ends of the inner surface and the outer surface; and
a first rectangular garter spring embedded within at least one of an inner and an outer corner of the annular seal body.

2. The sealing element according to claim 1, further comprising a second garter spring received within the first rectangular garter spring.

3. The sealing element according to claim 2, wherein the second garter spring is a round garter spring.

4. The sealing element according to claim 2, wherein the second garter spring is an oval garter spring.

5. The sealing element according to one of the preceding claims 1 to 4, wherein the rectangular garter spring is a square garter spring.

6. A sealing element for sealing a gap between a first member and a second member, comprising:
an annular seal body having an inner surface, an outer surface and a pair of side surfaces each connected between opposite ends of the inner surface and the outer surface; and
a pair of first rectangular garter springs embedded within at least two corners of the annular seal body.

7. The sealing element according to claim 6, further comprising a pair of second garter springs received within the pair of first rectangular garter springs.

8. The sealing element according to claim 7, wherein the pair of second garter springs are round garter springs.

9. The sealing element according to claim 7, wherein the pair of second garter springs are oval garter springs.

10. The sealing element according to one of the preceding claims 6 to 9, wherein the pair of rectangular garter springs are square garter springs.
